# EUROPÄISCHE PATENTSCHRIFT

(11) **EP 1 889 901 B1**
(45) Veröffentlichungstag und Bekanntmachung des Hinweises auf die Patenterteilung: **24.09.2008**
(21) Anmeldenummer: 06117988.3
(22) Anmeldetag: 27.07.2006
(51) Int. Cl.: C11D 3/39, C11D 17/00, C11D 3/12, C11D 3/02, C01B 15/10

(54) **Umhüllte Natriumpercarbonatpartikel**
Coated sodium percarbonate particle
Particules de percarbonate de sodium enrobées

(43) Veröffentlichungstag der Anmeldung: 20.02.2008
(73) Patentinhaber: Evonik Degussa GmbH, 45128 Essen (DE)
(72) Erfinder: Leininger, Stefan, 63505 Langenselbold (DE); Jakob, Harald, 63594 Hasselroth (DE); Overdick, Ralph, 65719 Hofheim (DE)

(56) Entgegenhaltungen:
- EP-A- 1 612 185
- EP-A- 1 728 762
- EP-A1- 0 567 140
- WO-A-95/15292
- WO-A-20/04056954
- WO-A-20/04058640
- DE-A1- 19 544 293
- GB-A- 2 123 044
- US-A- 4 526 698

## Beschreibung

Gegenstand der Erfindung sind umhüllte Natriumpercarbonatpartikel mit hoher Lagerstabilität in Waschmitteln und Reinigungsmitteln.

Natriumpercarbonat wird zunehmend als bleichwirksamer Bestandteil in Waschmitteln und Reinigungsmitteln eingesetzt. Natriumpercarbonat muss für diese Anwendung eine ausreichende Lagerbeständigkeit in Waschmittel- und Reinigungsmittelzubereitungen aufweisen, da es sonst bei der Lagerung der Waschmittel und Reinigungsmittel zu einem unerwünschten Verlust an Aktivsauerstoff und damit an Bleichwirkung kommt. Natriumpercarbonat ist feuchtigkeitsempfindlich und zersetzt sich in Waschmittel- und Reinigungsmittelzubereitungen bei Einwirkung von Feuchtigkeit unter Verlust von Aktivsauerstoff. Deshalb wird Natriumpercarbonat zur Herstellung von Waschmitteln oder Reinigungsmitteln üblicherweise in umhüllter Form eingesetzt, wobei die Hüllschicht die Einwirkung von Feuchtigkeit auf die umhüllten Natriumpercarbonatpartikel verhindert. Geeignete Hüllschichten aus anorganischen hydratbildenden Salzen, wie zum Beispiel Natriumcarbonat, Natriumsulfat oder Magnesiumsulfat und Mischungen solcher Salze sind beispielsweise aus DE 24 17 572, EP-A 0 863 842 und US 4,325,933 bekannt.

US 4,526,698 offenbart Natriumpercarbonatpartikel, die mit einer Borat-haltigen Hüllschicht umhüllt sind. Die Hüllschicht kann neben dem Borat weitere organische oder anorganische Verbindungen enthalten. Als Beispiele für anorganische Verbindungen sind Natriumcarbonat, Glaubersalz und Magnesiumsulfat genannt. Aus den Ausführungsbeispielen geht hervor, dass für die Kombination von Natriumborat mit Polyethylenglykol, organischen Komplexbildnern, Natriumsilikaten oder Magnesiumverbindungen ein synergistischer Effekt in der Stabilisierung auftritt, während mit Natriumcarbonat keine Synergie beobachtet wurde.

WO 95/15292 offenbart ein Verfahren zur Herstellung von Alkalimetallpercarbonatpartikeln mit Borsäure-haltiger Hüllschicht durch Aufsprühen einer wässrigen Lösung, die zusätzlich zu Borsäure noch ein neutrales Alkalimetall- oder Ammoniumsalz enthält, das die Löslichkeit von Borsäure erhöht. Als bevorzugte Salze sind Natriumchlorid, Kaliumchlorid, Natriumsulfat und Kaliumsulfat genannt. Außerdem ist genannt, dass zusätzlich zu Borsäure oder an Stelle von Borsäure auch Alkalimetallborate verwendet werden können. Durch die Kombination eines neutralen Alkalimetallsalzes mit einem Borat soll eine verringerte Agglomeration der Alkalimetallpercarbonatpartikel bewirkt werden. WO 98/15292 enthält keine Offenbarung zur Stabilität von Alkalimetallpercarbonatpartikeln mit einer Borat-haltigen Hüllschicht.

EP 567 140 offenbart ein Verfahren zur Herstellung von umhüllten Natriumpercarbonatpartikeln durch Aufbringen einer ersten Hüllkomponente, ausgewählt aus Borsäuren, Boraten und Alkalimetallsilikaten, und einer zweiten Hüllkomponente, ausgewählt aus Carbonaten, Hydrogencarbonaten und Sulfaten, bei dem mindestens eine der Hüllkomponenten in Form einer wässrigen Suspension aufgebracht wird. Die Ausführungsbeispiele 2, 4 und 5 offenbaren Natriumpercarbonatpartikel mit Hüllschichten aus 5,5 Gew.-% Natriummetaborat-Tetrahydrat in Kombination mit 5 Gew.-% Soda, Natriumhydrogencarbonat oder Natriumsulfat. Aus den Ausführungsbeispielen 30 bis 32 geht hervor, dass die mit einer Kombination von Borat und Natriumsulfat umhüllten Natriumpercarbonatpartikel in einem Waschmittel eine geringere Lagerstabilität zeigten als die mit einer Kombination von Borat und Soda, bzw. Borat und Natriumhydrogencarbonat umhüllten Natriumpercarbonatpartikel.

DE 27 12 139 offenbart Natriumpercarbonatpartikel mit einer Umhüllung aus entwässertem Natriumperborat und einem Natriumsilikat, die zusätzlich wasserbindende indifferente Stoffe enthält. Als geeignete wasserbindende indifferente Stoffe sind Natriumtripolyphosphat, calcinierte Soda, Natriumsulfat und Natriumpercarbonat genannt. Die beschriebenen Natriumpercarbonatpartikel enthalten Natriumperborat-Monohydrat in Mengen von 5 Gew.-% und mehr und weisen dementsprechend hohe Gehalte an Bor auf.

Die aus dem Stand der Technik bekannten Natriumpercarbonatpartikel mit Borat-haltiger Hüllschicht weisen den Nachteil auf, dass die Hüllschicht eine relativ große Menge an Bor enthält und dadurch bei einer Verwendung der Natriumpercarbonatpartikel Waschmitteln oder Reinigungsmitteln eine unerwünscht hohe Menge an Borat in das bei der Verwendung anfallende Abwasser gerät.

Es wurde nun überraschend gefunden, dass bei Natriumpercarbonatpartikeln mit 1 bis 10 Gew.-% einer Hüllschicht, die 70 Gew.-% oder mehr an Natriumsulfat und bis zu 20 Gew.-% eines Natriumborats enthält, eine synergistische Wirkung von Natriumsulfat und Natriumborat auf die Stabilisierung der Natriumpercarbonatpartikel in Waschmittel- und Reinigungsmittelzubereitungen auftritt, d.h. eine solche Hüllschicht bewirkt eine bessere Stabilisierung, als sie mit einer Hüllschicht aus Natriumsulfat oder Natriumborat allein erreicht wird.

Gegenstand der Erfindung sind deshalb Natriumpercarbonatpartikel mit einer Hüllschicht, die 70 bis 99,8 Gew.-% wasserfreies Natriumsulfat und 0,2 bis 20 Gew.-% eines Natriumborats enthält, wobei der Gewichtsanteil der Hüllschicht 1 bis 10 % bezogen auf die Masse des Natriumpercarbonatpartikels beträgt.

Die erfindungsgemäßen Natriumpercarbonatpartikel umfassen einen Kern, der im Wesentlichen aus Natriumcarbonat-Perhydrat der Zusammensetzung 2 Na₂CO₃ · 3 H₂O₂ besteht. Sie können darüber hinaus noch geringe Mengen an bekannten Stabilisatoren für Persauerstoffverbindungen, wie zum Beispiel Magnesiumsalze, Silikate, Phosphate und/oder Chelatkomplexbildner enthalten. Der Anteil von Natriumpercarbonat im Kern der erfindungsgemäßen Natriumpercarbonatpartikel beträgt vorzugsweise mehr als 80 Gew.-% und besonders bevorzugt mehr als 95 Gew.-%. Der Anteil an organischen Kohlenstoffverbindungen im Kern beträgt vorzugsweise weniger als 1 Gew.-%, besonders bevorzugt weniger als 0,1 Gew.-%.

In einer bevorzugten Ausführungsform enthält der Kern geringe Mengen an Additiven, die auf den Aktivsauerstoffgehalt stabilisierend wirken, wobei der Anteil an stabilisierenden Additiven im Kern vorzugsweise weniger als 2 Gew.-% beträgt. Als stabilitätserhöhende Additive werden vorzugsweise Magnesiumsalze, Wasserglas, Stannate, Pyrophosphate, Polyphosphate sowie Chelatkomplexbildner aus der Reihe der Hydroxycarbonsäuren, Aminocarbonsäuren, Aminophosphonsäuren, Phosphonocarbonsäuren und Hydroxyphosphonsäuren sowie deren Alkalimetall-, Ammonium- oder Magnesiumsalze verwendet. In einer besonders bevorzugten Ausführungsform enthält der Kern als stabilisierendes Additiv ein Alkalimetallsilikat, vorzugsweise Wasserglas mit einem SiO₂/Na₂O-Modul im Bereich von 1 bis 3, in einer Menge von 0,1 bis 1 Gew.-%. In der am meisten bevorzugten Ausführungsform enthält der Kern zusätzlich zu dieser Menge an Alkalimetallsilikat noch eine Magnesiumverbindung in einer Menge von 50 bis 2000 ppm Mg²⁺.

Der Kern der erfindungsgemäßen Natriumpercarbonatpartikel kann nach einem der bekannten Herstellverfahren für Natriumpercarbonat erzeugt wurden. Ein geeignetes Herstellungsverfahren für Natriumpercarbonat ist die Kristallisation von Natriumpercarbonat aus wässrigen Lösungen von Wasserstoffperoxid und Natriumcarbonat, wobei die Kristallisation sowohl in Gegenwart, als auch in Abwesenheit eines Aussalzungsmittels durchgeführt werden kann, wozu beispielhaft auf EP-A 0 703 190 und DE 2 744 574 verwiesen wird. Nach dem Kristallisationsverfahren in Gegenwart eines Aussalzungsmittels hergestellte Natriumpercarbonatpartikel können noch geringe Mengen des verwendeten Aussalzungsmittels, wie z.B. Natriumchlorid enthalten. Ebenfalls geeignet ist die Wirbelschicht-Aufbaugranulation durch Aufsprühen von wässriger Wasserstoffperoxidlösung und wässriger Sodalösung auf Natriumpercarbonat-Keime in einer Wirbelschicht bei gleichzeitiger Verdampfung von Wasser, beispielhaft wird auf WO 95/06615 verwiesen. Weiterhin ist auch die Umsetzung von festem Natriumcarbonat mit einer wässrigen Wasserstoffperoxidlösung und nachfolgende Trocknung ein geeignetes Herstellverfahren.

In einer bevorzugten Ausführungsform weisen die erfindungsgemäßen Natriumpercarbonatpartikel einen Kern aus Natriumpercarbonat auf, der durch Wirbelschichtgranulation aus wässrigen Lösungen von Wasserstoffperoxid und Natriumcarbonat erhältlich ist. Durch eine solche Wirbelschichtgranulation wird ein Kernmaterial erhalten, das sich durch einen besonders dichten, schalenförmigen Aufbau und eine glattere Oberfläche von den nach anderen Herstellverfahren erhaltenen Kernmaterialien unterscheidet. Erfindungsgemäße umhüllte Natriumpercarbonatpartikel, deren Kern durch Wirbelschicht-Aufbaugranulation hergestellt wurde, zeigen gegenüber Partikeln, deren Kern nach einem anderen Verfahren hergestellt wurde, eine verbesserte Lagerstabilität in Waschmittel- und Reinigungsmittelzubereitungen.

Die erfindungsgemäßen umhüllten Natriumpercarbonatpartikel umfassen zusätzlich zum Kern aus Natriumpercarbonat noch eine Hüllschicht, die 70 bis 99,8 Gew.-% wasserfreies Natriumsulfat und 0,2 bis 20 Gew.-% eines Natriumborats enthält und deren Gewichtsanteil bezogen auf die Masse des Natriumpercarbonatpartikels 1 bis 10 % beträgt. Vorzugsweise enthält die Hüllschicht mindestens 80 Gew.-%, besonders bevorzugt mindestens 90 Gew.-% Natriumsulfat. Der Anteil an Natriumborat in der Hüllschicht beträgt vorzugsweise 0,2 bis weniger als 10 Gew.-%, besonders bevorzugt 0,5 bis 5 Gew.-%. Die Mengenangaben für Natriumborat beziehen sich dabei auf eine Berechnung als wasserfreies Natriummetaborat NaBO₂. Das Natriumborat kann in der Hüllschicht jedoch auch in anderen Zusammensetzungen, z.B. als Natriumtetraborat Na₂B₄O₇, Natriumoctaborat Na₂B₈O₁₃ oder Natriumpentaborat Na₂B₁₀O₁₆, vorliegen.

Der Gewichtsanteil der Hüllschicht bezogen auf die Masse des Natriumpercarbonatpartikels beträgt vorzugsweise 2 bis 8 %, besonders bevorzugt 2 bis 6 %. In einer besonders bevorzugten Ausführungsform wird der Anteil an Natriumborat in der Hüllschicht und die Menge der Hüllschicht so gewählt, dass der Gehalt an Bor in den erfindungsgemäßen umhüllten Natriumpercarbonatpartikeln im Bereich von 20 bis 700 ppm Bor, insbesondere 50 bis 350 ppm Bor, liegt.

Die erfindungsgemäßen umhüllten Natriumpercarbonatpartikel können in der Hüllschicht, die Natriumsulfat und ein Natriumborat enthält, zusätzlich noch bis zu 25 Gew.-% Natriumcarbonat, Natriumhydrogencarbonat oder Mischungen davon enthalten. Natriumcarbonat und Natriumhydrogencarbonat können auch in Form von Mischsalzen mit Natriumsulfat vorliegen, Natriumcarbonat vorzugsweise in Form eines Mischsalzes der Zusammensetzung 2 Na₂SO₄ · Na₂CO₃. Vorzugsweise enthält die Hüllschicht, die Natriumsulfat und ein Natriumborat enthält, neben Natriumsulfat, Natriumborat, Natriumcarbonat, Natriumhydrogencarbonat und deren Mischsalzen nicht mehr als 5 Gew.-% weiterer Verbindungen.

Zusätzlich zu der erfindungsgemäßen Hüllschicht, die Natriumsulfat und ein Natriumborat enthält, können die erfindungsgemäßen Natriumpercarbonatpartikel noch eine oder mehrere weitere Hüllschichten enthalten, wobei diese sowohl zwischen dem Kern und der erfindungsgemäßen Hüllschicht, als auch außerhalb der erfindungsgemäßen Hüllschicht angeordnet sein können. Vorzugsweise befindet sich die erfindungsgemäße Hüllschicht unmittelbar auf dem Kernmaterial aus Natriumpercarbonat.

Zwischen den Hüllschichten sowie zwischen der innersten Hüllschicht und dem Kern kann eine scharfe Grenze existieren, an der sich die Zusammensetzung sprunghaft ändert. In der Regel wird sich jedoch zwischen den einzelnen Hüllschichten, sowie zwischen der innersten Hüllschicht und dem Kern jeweils eine Übergangszone ausbilden, die die Komponenten beider aneinander grenzenden Schichten enthält. Solche Übergangszonen entstehen beispielsweise durch das Auftragen einer Hüllschicht in Form einer wässrigen Lösung, wobei zu Anfang des Schichtaufbaus ein Teil der darunter liegenden Schicht angelöst wird, so dass eine Übergangszone entsteht, die die Bestandteile beider Schichten enthält. In der bevorzugten Ausführungsform, bei der sich die erfindungsgemäße Hüllschicht unmittelbar auf dem Kernmaterial aus Netriumpercarbonat befindet, kann sich so zwischen dem Kern und der erfindungsgemäßen Hüllschicht eine Übergangsschicht bilden, die Natriumsulfat, Natriumborat, Natriumcarbonat, Natriumhydrogencarbonat, sowie Mischsalze dieser Komponenten enthält.

Die erfindungsgemäße Hüllschicht, die Natriumsulfat und ein Natriumborat enthält, ist vorzugsweise so ausgebildet, dass sie das darunter liegende Material zu mehr zu als 95 %, vorzugsweise zu mehr als 98 % und insbesondere vollständig bedeckt.

In einer bevorzugten Ausführungsform weisen die erfindungsgemäßen Natriumpercarbonatpartikel eine Hüllschicht auf, die durch Aufsprühen einer wässrigen Lösung, die Natriumsulfat und ein Natriumborat gelöst enthält, und Verdampfen von Wasser in einer Wirbelschicht hergestellt ist. Die so erhältlichen umhüllten Natriumpercarbonatpartikel unterscheiden sich von Natriumpercarbonatpartikeln, bei denen eine der Komponenten der Hüllschicht in fester Form aufgebracht wird, durch eine gleichmäßige Verteilung von Natriumsulfat und Natriumborat in der Hüllschicht und weisen gegenüber Natriumpercarbonatpartikeln mit ungleichmäßiger Verteilung von Natriumsulfat und Natriumborat in der Hüllschicht eine bessere Lagerstabilität in Waschmittel- und Reinigungsmittelzubereitungen auf.

In einer besonders bevorzugten Ausführungsform weisen die erfindungsgemäßen Natriumpercarbonatpartikel eine Hüllschicht auf, die durch Aufsprühen einer wässrigen Lösung erhalten wird, die Natriumsulfat und ein Natriumborat gelöst enthält und die insgesamt nicht mehr als 25 Gew.-% gelöste Salze enthält. Während der Stand der Technik lehrt, zum Aufbringen einer Hüllschicht möglichst konzentrierte Lösungen der Hüllkomponenten zu verwenden um die zu Verdampfende Wassermenge gering zu halten, wurde nun überraschend gefunden, dass Natriumpercarbonatpartikel mit einer erfindungsgemäße Hüllschicht, die Natriumsulfat und ein Natriumborat enthält und die durch Aufsprühen einer wässrigen Lösung mit nicht mehr als 25 Gew.-% gelösten Salzen erhältlich ist, eine bessere Lagerstabilität in Waschmittel- und Reinigungsmittelzubereitungen aufweisen als Natriumpercarbonatpartikel, die durch Aufsprühen einer wässrigen Lösung mit einem höheren Gehalt an gelösten Salzen erhältlich sind.

Zum Aufbringen der erfindungsgemäßen Hüllschicht, die Natriumsulfat und ein Natriumborat enthält, können Lösungen verwendet werden, die durch Auflösen von Natriumsulfat und eines Alkalimetallborats in Wasser erhalten werden. Falls das Alkalimetallborat ein anderes Alkalimetall als Natrium enthält, dann bildet sich das Natriumborat der Hüllschicht beim Aufsprühen der Lösung mit Natriumionen, die aus dem Natriumsulfat stammen.

Während des Aufsprühens der wässrigen Lösung, die Natriumsulfat und ein Natriumborat gelöst enthält, wird vorzugsweise bereits der größte Teil des darin enthaltenen Wassers, insbesondere mehr als 90% des in der wässrigen Lösung enthaltenen Wassers, durch Wärmezufuhr verdampft, so dass während des Aufbringens der Hüllschicht nur ein geringer Teil des darunter liegenden Materials wieder angelöst wird und sich bereits während des Aufsprühens eine feste Hüllschicht ausbildet. Das Aufbringen der erfindungsgemäßen Hüllschicht erfolgt vorzugsweise durch Versprühen einer Natriumsulfat und ein Natriumborat enthaltenden wässrigen Lösung in einer Wirbelschicht und besonders bevorzugt nach dem in EP-A 0 970 917 beschriebenen Verfahren, mit dem bereits mit geringen Mengen an Hüllschichtmaterial eine dichte Hüllschicht erreicht werden kann. Das Aufbringen der Hüllschicht in einer Wirbelschicht erfolgt vorzugsweise unter Zufuhr eines Trocknungsgases zur Wirbelschicht, so dass sich in der Wirbelschicht eine Temperatur im Bereich von 30 bis 90 °C, vorzugsweise 50 bis 70 °C, einstellt.

Die erfindungsgemäßen umhüllten Natriumpercarbonatpartikel mit einer Hüllschicht, die Natriumsulfat und ein Natriumborat enthält, zeigen überraschenderweise eine bessere Lagerstabilität in Waschmittel- und Reinigungsmittelzubereitungen als umhüllte Natriumpercarbonatpartikel, die in der Hüllschicht nur eine der beiden Komponenten aufweisen. Ihre Lagerstabilität ist auch gegenüber Natriumpercarbonatpartikeln verbessert, die in der Hüllschicht an Stelle von Natriumsulfat ein anderes wasserbindendes Salz, wie z.B. Natriumcarbonat oder Natriumhydrogencarbonat, in gleicher Menge in Kombination mit einem Natriumborat enthalten. Die verbesserte Lagerstabilität in Waschmittel- und Reinigungsmittelzubereitungen führt zu geringeren Verlusten an Aktivsauerstoffgehalt während der Lagerung der Waschmittel- und Reinigungsmittelzubereitungen in feuchter Umgebung.

Die erfindungsgemäß umhüllten Natriumpercarbonatpartikel zeigen außerdem keine Verbackung unter Druckeinwirkung und nur eine geringe Wärmefreisetzung in Substanz und können deshalb sicher in einem Silo gelagert werden, ohne dass es zu Verbackungen im Silo oder zu einer Selbsterwärmung des Siloinhalts kommt.

Darüber hinaus weisen auch Waschmittel- und Reinigungsmittelzubereitungen, die erfindungsgemäß umhüllte Natriumpercarbonatpartikel enthalten, eine verbesserte Sicherheit bei der Lagerung in Silobehältern auf, da sie bei adiabatischer Warmlagerung keine oder nur eine geringe Selbsterwärmung zeigen.

In einer weiteren Ausführungsform der Erfindung können die umhüllten Natriumpercarbonatpartikel eine zusätzliche Hüllschicht aufweisen, die als Hauptbestandteil ein Alkalimetallsilikat mit einem Modul SiO₂ zu Alkalimetalloxid von mehr als 2,5 enthält. Die zusätzliche Hüllschicht liegt vorzugsweise über der erfindungsgemäßen Hüllschicht. Die zusätzliche Hüllschicht enthält als Hauptbestandteil ein Alkalimetallsilikat, wenn sie keine weitere Komponente in einem Gewichtsanteil enthält, der größer ist als der Anteil an Alkalimetallsilikat. Der Modul des Alkalimetallsilikats liegt vorzugsweise im Bereich von 3 bis 5 und besonders bevorzugt im Bereich von 3,2 bis 4,2. Der Anteil der zusätzlichen Hüllschicht an den erfindungsgemäßen umhüllten Natriumpercarbonatpartikeln liegt vorzugsweise im Bereich von 0,2 bis 3 Gew.-%. Der Anteil an Alkalimetallsilikat im Material der zusätzlichen Hüllschicht beträgt vorzugsweise mehr als 50 Gew.-% und besonders bevorzugt mehr als 80 Gew.-%. Als Alkalimetallsilikat wird in der zusätzlichen Hüllschicht vorzugsweise Natriumsilikat und besonders bevorzugt Natriumwasserglas eingesetzt.

Erfindungsgemäß umhüllte Natriumpercarbonatpartikel mit einer zusätzlichen Hüllschicht, die als Hauptbestandteil ein Alkalimetallsilikat mit einem Modul SiO₂ zu Alkalimetalloxid von mehr als 2,5 enthält, zeigen zusätzlich eine verzögerte Lösezeit in Wasser und eine verbesserte Lagerstabilität in wasserhaltigen flüssigen oder gelförmigen Medien bei Wassergehalten von bis zu 15 Gew.-%. Sie lassen sich deshalb vorteilhaft zur Herstellung von flüssigen oder gelförmigen Waschmittel- oder Reinigungsmittelzubereitungen einsetzen.

In einer weiteren Ausführungsform der Erfindung können die umhüllten Natriumpercarbonatpartikel auf ihrer Oberfläche zusätzlich 0,01 bis 1 Gew.-%, vorzugsweise 0,1 bis 0,5 Gew.-%, eines feinteiligen Oxids der Elemente Si, A1 oder Ti oder eines Mischoxids dieser Elemente aufweisen. Geeignete feinteilige Oxide sind zum Beispiel pyrogene Oxide, die durch Flammhydrolyse von flüchtigen Verbindungen der Elemente Silicium, Aluminium oder Titan oder von Mischungen dieser Verbindungen erhalten werden. Die auf diesem Weg erhältlichen pyrogenen Oxide oder Mischoxide weisen vorzugsweise eine mittlere Primärpartikelgröße von weniger als 50 nm auf und können zu größeren Partikeln aggregiert sein, deren mittlere Partikelgröße vorzugsweise weniger als 20 µm beträgt. Ebenso geeignet sind gefällte Oxide, die aus wässrigen Lösungen von Verbindungen der Elemente Silicium, Aluminium oder Titan oder Mischungen dieser Verbindungen ausgefällt wurden. Die gefällten Oxide, bzw. Mischoxide können neben Silicium, Aluminium und/oder Titan noch geringe Mengen an Alkalimetall- oder Erdalkalimetallionen enthalten. Die mittlere Partikelgröße der gefällten Oxide beträgt vorzugsweise weniger als 50 µm und besonders bevorzugt weniger als 20 µm. Die spezifische Oberfläche der feinteiligen Oxide nach BET liegt vorzugsweise im Bereich von 100 bis 300 m²/g.

Vorzugsweise weisen die umhüllten Natriumpercarbonatpartikel auf ihrer Oberfläche ein hydrophobiertes feinteiliges Oxid und besonders bevorzugt eine hydrophobierte pyrogene oder gefällte Kieselsäure auf. Hydrophobierte Oxide im Sinne der Erfindung sind Oxide, die an ihrer Oberfläche über chemische Bindungen gebundene organische Reste aufweisen und von Wasser nicht benetzt werden. Hydrophobierte Oxide können zum Beispiel durch Umsetzen von pyrogenen oder gefällten Oxiden mit Organosilanen, Silazanen oder Polysiloxanen hergestellt werden. Geeignete Siliciumverbindungen zur Herstellung von hydrophobierten Oxiden sind aus EP-A 0 722 992, Seite 3, Zeile 9 bis Seite 6, Zeile 6 bekannt. Besonders bevorzugt sind hydrophobierte Oxide, die durch Umsetzung eines feinteiligen Oxids mit einer Siliciumverbindung der in EP-A 0 722 992 angeführten Verbindungsklassen (a) bis (e) und (k) bis (m) hergestellt wurden. Die hydrophobierten feinteiligen Oxide weisen vorzugsweise eine Methanolbenetzbarkeit von mindestens 40 auf.

Erfindungsgemäß umhüllte Natriumpercarbonatpartikel, die auf ihrer Oberfläche zusätzlich ein feinteiliges Oxid aufweisen, zeigen eine noch geringere Neigung zur Verbackung bei der Lagerung, vor allem bei der Lagerung unter Druckbelastung und sind deshalb noch besser silierbar. Darüber hinaus weisen solche Partikel in Waschmittel- und Reinigungsmittel-Zubereitungen eine weiter erhöhte Lagerstabilität auf.

Die erfindungsgemäßen Natriumpercarbonatpartikel weisen vorzugsweise eine mittlere Partikelgröße im Bereich von 0,2 bis 5 mm und besonders bevorzugt im Bereich von 0,5 bis 2 mm auf. Bevorzugt werden Natriumpercarbonatpartikel mit einem geringen Feinkornanteil, vorzugsweise mit einem Anteil von weniger als 10 Gew.-% Partikel kleiner als 0,2 mm und besonders bevorzugt weniger als 10 Gew.-% Partikel mit einer Partikelgröße von weniger als 0,3 mm.

Die erfindungsgemäßen Natriumpercarbonatpartikel weisen vorzugsweise eine im Wesentlichen kugelförmige Gestalt auf mit einer glatten Oberfläche. Partikel mit einer glatten Oberfläche weisen eine Oberflächenrauhigkeit von weniger als 10 % des Partikeldurchmessers und bevorzugt von weniger als 5 % des Partikeldurchmessers auf.

Durch eine entsprechende Auswahl der Partikelgröße und Partikelform läßt sich die Lagerstabilität der erfindungsgemäßen Natriumpercarbonatpartikel in Waschmittel- und Reinigungsmittelzubereitungen weiter verbessern.

Die erfindungsgemäßen umhüllten Natriumpercarbonatpartikel lassen sich vorteilhaft als bleichwirksamer Bestandteil in Waschmitteln und Reinigungsmitteln verwenden. Waschmittel im Sinne der Erfindung sind alle Zubereitungen, die zum Reinigen von Textilien in einer wässrigen Waschflotte geeignet sind. Reinigungsmittel im Sinne der Erfindung sind alle Zubereitungen, die im Zusammenwirken mit Wasser zur Reinigung von Oberflächen geeignet sind, die kein oder nur wenig Wasser aufsaugen. Eine im Sinne der Erfindung bevorzugte Form von Reinigungsmitteln sind Maschinengeschirrreiniger, die zum maschinellen Reinigen von Geschirr und Besteck geeignet sind.

Ein weiterer Gegenstand der Erfindung sind Waschmittel und Reinigungsmittel, die erfindungsgemäß umhüllte Natriumpercarbonatpartikel enthalten. Die erfindungsgemäßen Waschmittel und Reinigungsmittel enthalten die erfindungsgemäßen umhüllten Natriumpercarbonatpartikel vorzugsweise in einer Menge von 1 bis 40 Gew.-% bezogen auf die Gesamtmenge des Waschmittels beziehungsweise Reinigungsmittels.

Die erfindungsgemäßen Waschmittel und Reinigungsmittel können eine feste Form aufweisen und können dann neben den erfindungsgemäßen umhüllten Natriumpercarbonatpartikeln noch weitere Komponenten in Form von Pulver oder in Form von Granulaten enthalten. Sie können darüber hinaus auch verpresste Formkörper umfassen, wobei die erfindungsgemäßen umhüllten Natriumpercarbonatpartikeln Bestandteil der verpressten Formkörper sein können. Solche verpressten Formkörper in Form von Extrudaten, Pellets, Briketts oder Tabletten können durch Verfahren der Preßagglomeration, insbesondere durch Extrusion, Strangpressen, Lochpressen, Walzenkompaktieren oder Tablettieren hergestellt werden.

Für die Durchführung der Preßagglomeration können die erfindungsgemäßen Waschmittel oder Reinigungsmittel zusätzlich ein Bindemittel enthalten, dass den Formkörpern bei der Preßagglomeration eine höhere Festigkeit verleiht. Vorzugsweise wird bei erfindungsgemäßen Waschmitteln und Reinigungsmitteln, die verpresste Formkörper umfassen, aber kein zusätzliches Bindemittel verwendet und einer der waschaktiven Bestandteile, zum Beispiel ein nichtionisches Tensid, erfüllt die Funktion des Bindemittels.

Die erfindungsgemäßen Waschmittel und Reinigungsmittel können darüber hinaus auch eine flüssige Form oder Gelform aufweisen und die erfindungsgemäßen umhüllten Natriumpercarbonatpartikel in einer flüssigen Phase, beziehungsweise einer Gelphase dispergiert enthalten. Neben den erfindungsgemäßen umhüllten Natriumpercarbonatpartikeln können in der flüssigen Phase, beziehungsweise der Gelphase weitere Partikel dispergiert sein. Die rheologischen Eigenschaften der flüssigen Phase, beziehungsweise der Gelphase werden vorzugsweise so eingestellt, dass die darin dispergierten Partikel suspendiert bleiben und sich während einer Lagerung nicht absetzen. Die Zusammensetzung einer flüssigen Phase wird deshalb vorzugsweise so gewählt, dass sie thixotrope oder pseudoplastische Fließeigenschaften aufweist. Zur Einstellung solcher Fließeigenschaften können Suspensionshilfsmittel, wie quellende Tone, insbesondere Montmorillonite, gefällte und pyrogene Kieselsäuren, pflanzliche Gummis, insbesondere Xanthane und polymere Gelierungsmittel, wie Carboxylgruppen enthaltende Vinylpolymere zugesetzt werden.

Erfindungsgemäße Waschmittel und Reinigungsmittel in flüssiger Form oder Gelform enthalten vorzugsweise erfindungsgemäße umhüllte Natriumpercarbonatpartikel mit einer zusätzlichen Hüllschicht, die als Hauptbestandteil ein Alkalimetallsilikat mit einem Modul SiO₂ zu Alkalimetalloxid von mehr als 2,5 enthält. In dieser Ausführungsform können die Waschmittel und Reinigungsmittel bis zu 15 Gew.-% Wasser enthalten, ohne dass es während einer Lagerung zu einem Anlösen der umhüllten Natriumpercarbonatpartikel und einem dadurch bewirkten Freisetzen von Wasserstoffperoxid in die flüssige Phase beziehungsweise Gelphase kommt.

Die erfindungsgemäßen Waschmittel und Reinigungsmittel können neben den erfindungsgemäßen umhüllten Natriumpercarbonatpartikeln als weitere Komponenten beispielsweise noch Tenside, Builder, alkalische Komponenten, Bleichaktivatoren, Enzyme, chelatisierende Komplexbildner, Vergrauungsinhibitoren, Schauminhibitoren, optische Aufheller, Duftstoffe und Farbstoffe enthalten.

Als Tenside eignen sich für die erfindungsgemäßen Waschmittel und Reinigungsmittel vor allem anionische, nichtionische und kationische Tenside.

Geeignete anionische Tenside sind zum Beispiel Tenside mit Sulfonatgruppen, vorzugsweise Alkylbenzolsulfonate, Alkansulfonate, alpha-Olefinsulfonate, alpha-Sulfofettsäureester oder Sulfosuccinate. Bei Alkylbenzolsulfonaten werden solche mit einer geradkettigen oder verzweigten Alkylgruppe mit 8 bis 20 Kohlenstoffatomen, insbesondere mit 10 bis 16 Kohlenstoffatomen bevorzugt. Bevorzugte Alkansulfonate sind solche mit gradkettigen Alkylketten mit 12 bis 18 Kohlenstoffatomen. Bei alpha-Olefinsulfonaten werden vorzugsweise die Reaktionsprodukte der Sulfonierung von alpha-Olefinen mit 12 bis 18 Kohlenstoffatomen eingesetzt. Bei den alpha-Sulfofettsäureestern werden Sulfonierungsprodukte von Fettsäureestern aus Fettsäuren mit 12 bis 18 Kohlenstoffatomen und kurzkettigen Alkoholen mit 1 bis 3 Kohlenstoffatomen bevorzugt. Als anionische Tenside eignen sich auch Tenside mit einer Sulfatgruppe im Molekül, vorzugsweise Alkylsulfate und Ethersulfate. Bevorzugte Alkylsulfate sind solche mit geradkettigen Alkylresten mit 12 bis 18 Kohlenstoffatomen. Geeignet sind außerdem beta-verzweigte Alkylsulfate und in der Mitte der längsten Alkylkette ein- oder mehrfach alkylsubstituierte Alkylsulfate. Bevorzugte Ethersulfate sind die Alkylethersulfate, die durch Ethoxylierung von linearen Alkoholen mit 12 bis 18 Kohlenstoffatomen mit 2 bis 6 Ethylenoxideinheiten und anschließende Sulfatierung erhalten werden. Als anionische Tenside können schließlich auch Seifen verwendet werden, wie zum Beispiel Alkalimetallsalze von Laurinsäure, Myristinsäure, Palmitinsäure, Stearinsäure und/oder natürlichen Fettsäuregemischen, wie zum Beispiel Kokos-, Palmkern- oder Talgfettsäuren.

Als nicht-ionische Tenside eignen sich zum Beispiel alkoxylierte Verbindungen, insbesondere ethoxylierte und propoxylierte Verbindungen. Besonders geeignet sind Kondensationsprodukte von Alkylphenolen oder Fettalkoholen mit 1 bis 50 mol, vorzugsweise 1 bis 10 mol Ethylenoxid und/oder Propylenoxid. Ebenfalls geeignet sind Polyhydroxyfettsäureamide, in denen am Amidstickstoff ein organischer Rest mit einer oder mehreren Hydroxylgruppen, welche auch alkoxyliert sein können, gebunden ist. Ebenfalls als nicht-ionische Tenside geeignet sind Alkylglycoside mit einer geradkettigen oder verzweigten Alkylgruppe mit 8 bis 22 Kohlenstoffatomen, insbesondere mit 12 bis 18 Kohlenstoffatomen und einem Mono- oder Diglycosidrest, der vorzugsweise von Glucose abgeleitet ist.

Geeignete kationische Tenside sind beispielsweise mono- und dialkoxylierte quaternäre Amine mit einem am Stickstoff gebundenen C₆- bis C₁₈-Alkylrest und ein oder zwei Hydroxyalkylgruppen.

Die erfindungsgemäßen Waschmittel und Reinigungsmittel enthalten weiterhin Builder, die in der Lage sind, bei der Verwendung im Wasser gelöste Calcium- und Magnesiumionen zu binden. Geeignete Builder sind Alkalimetallphosphate und Alkalimetallpolyphosphate, insbesondere Pentanatriumtriphosphat; wasserlösliche und wasserunlösliche Natriumsilikate, insbesondere Schichtsilikate der Formel Na₅Si₂O₅; Zeolithe der Strukturen A, X und/oder P; sowie Trinatriumcitrat. Zusätzlich zu den Buildern können außerdem organische Cobuilder, wie zum Beispiel Polyacrylsäure, Polyasparaginsäure und/oder Acrylsäure-Copolymere mit Methacrylsäure, Acrolein oder sulfonsäurehaltigen Vinylmonomeren, sowie deren Alkalimetallsalze verwendet werden.

Die erfindungsgemäßen Waschmittel und Reinigungsmittel enthalten außerdem in der Regel alkalische Komponenten, die bei bestimmungsgemäßer Anwendung in der Waschflotte, beziehungsweise der wässrigen Reinigungsmittellösung einen pH-Wert im Bereich von 8 bis 12 bewirken. Als alkalische Komponenten sind vor allem Natriumcarbonat, Natriumsesquicarbonat, Natriummetasilikat und andere lösliche Alkalimetallsilikate geeignet.

Als Bleichaktivatoren eignen sich für die erfindungsgemäßen Waschmittel und Reinigungsmittel vor allem Verbindungen mit einer oder mehreren perhydrolysefähigen an Stickstoff oder an Sauerstoff gebundenen Acylgruppen, die mit dem aus den Natriumpercarbonatpartikeln freigesetzten Wasserstoffperoxid in der Waschflotte, beziehungsweise der wässrigen Reinigungsmittellösung zu Peroxycarbonsäuren reagieren. Beispiele für solche Verbindungen sind mehrfach acylierte Alkylendiamine, wie insbesondere Tetraacetylethylendiamin (TAED); acylierte Triazinderivate, insbesondere 1,5-Diacetyl-2,4-dioxohexahydro-1,3,5-triazin (DADHT); acylierte Glykolurile, insbesondere Tetraacetylglykoluril (TAGU); N-Acylimide, insbesondere N-Nonanoylsuccinimid (NOSI); acylierte Phenolsulfonate, insbesondere n-Nonanoyl- oder iso-Nonanoyloxybenzolsulfonat (n- bzw. iso-NOBS); Carbonsäureanhydride, wie Phthalsäureanhydrid; acylierte mehrwertige Alkohole, wie Ethylenglykoldiacetat, 2,5-Diacetoxy-2,5-dihydrofuran, acetyliertes Sorbitol und Mannitol und acylierte Zucker, wie Pentaacetylglucose; Enolester; sowie N-acylierte Lactame, insbesondere N-Acylcaprolactame und N-Acylvalerolactame. Ebenfalls als Bleichaktivatoren geeignet sind aminofunktionalisierte Nitrile und deren Salze (Nitrilquats), die zum Beispiel aus der Zeitschrift Tenside Surf. Det. 1997, 34(6), Seiten 404-409 bekannt sind. Als Bleichaktivatoren können außerdem Übergangsmetallkomplexe eingesetzt werden, die Wasserstoffperoxid zur bleichenden Fleckentfernung aktivieren können. Geeignete Übergangsmetallkomplexe sind beispielsweise bekannt aus EP-A 0 544 490 Seite 2, Zeile 4 bis Seite 3, Zeile 57; WO 00/52124 Seite 5, Zeile 9 bis Seite 8, Zeile 7 und Seite 8, Zeile 19 bis Seite 11, Zeile 14; WO 04/039932, Seite 2, Zeile 25 bis Seite 10, Zeile 21; WO 00/12808 Seite 6, Zeile 29 bis Seite 33, Zeile 29; WO 00/60043 Seite 6, Zeile 9 bis Seite 17, Zeile 22; WO 00/27975, Seite 2, Zeilen 1 bis 18 und Seite 3, Zeile 7 bis Seite 4, Zeile 6; WO 01/05925, Seite 1, Zeile 28 bis Seite 3, Zeile 14; WO 99/64156, Seite 2, Zeile 25 bis Seite 9, Zeile 18; sowie GB-A 2 309 976, Seite 3, Zeile 1 bis Seite 8, Zeile 32.

Die erfindungsgemäßen Waschmittel und Reinigungsmittel können weiterhin Enzyme enthalten, die die Reinigungswirkung verstärken, insbesondere Lipasen, Cutinasen, Amylasen, neutrale und alkalische Proteasen, Esterasen, Zellulasen, Pektinasen, Lactasen und/oder Peroxidasen. Die Enzyme können dabei an Trägerstoffe adsorbiert oder in Hüllsubstanzen eingebettet sein, um sie gegen Zersetzung zu schützen.

Die erfindungsgemäßen Waschmittel und Reinigungsmittel können außerdem chelatisierende Komplexbildner für Übergangsmetalle enthalten, mit denen sich eine katalytische Zersetzung von Aktivsauerstoffverbindungen in der Waschflotte, beziehungsweise der wässrigen Reinigungsmittellösung vermeiden läßt. Geeignet sind zum Beispiel Phosphonate, wie Hydroxyethan-1,1-disphosphonat, Nitrilotrimethylenphosphonat, Diethylentriaminpenta(methylenphosphonat), Ethlyendiamintetra(methylenphosphonat), Hexamethylendiamintetra(methylenphosphonat) und deren Alkalimetallsalze. Ebenfalls geeignet sind Nitrilotriessigsäure und Polyaminocarbonsäuren, wie insbesondere Ethylendiamintetraessigsäure, Diethylentriaminpentaessigsäure, Ethylendiamin-N,N'-disuccinsäure, Methylglycindiessigsäure und Polyaspartate, sowie deren Alkalimetall- und Ammoniumsalze. Schließlich sind auch mehrwertige Carbonsäuren und insbesondere Hydroxycarbonsäuren, wie insbesondere Weinsäure und Zitronensäure als chelatisierende Komplexbildner geeignet.

Die erfindungsgemäßen Waschmittel können zusätzlich Vergrauungsinhibitoren enthalten, die von der Faser abgelösten Schmutz suspendiert halten und ein Wiederaufziehen des Schmutzes auf die Faser verhindern. Geeignete Vergrauungsinhibitoren sind zum Beispiel Celluloseether, wie Carboxymethylcellulose und deren Alkalimetallsalze, Methylcellulose, Hydroxyethylcellulose und Hydroxypropylcellulose. Ebenfalls geeignet ist Polyvinylpyrrolidon.

Die erfindungsgemäßen Waschmittel und Reinigungsmittel können weiterhin auch Schauminhibitoren enthalten, die die Schaumbildung in der Waschflotte verringern. Geeignete Schauminhibitoren sind zum Beispiel Organopolysiloxane wie Polydimethylsiloxan, Paraffine und/oder Wachse, sowie deren Gemische mit feinteiligen Kieselsäuren.

Die erfindungsgemäßen Waschmittel können gegebenenfalls optische Aufheller enthalten, die auf die Faser aufziehen, im UV-Bereich Licht absorbieren und blau fluoreszieren, um eine Vergilbung der Faser auszugleichen. Geeignete optische Aufheller sind zum Beispiel Derivate der Diaminostilbendisulfonsäure, wie Alkalimetallsalze von 4,4'-Bis-(2-anilino-4-morpholino-1,3,5-triazinyl-6-amino)-stilben-2,2'-disulfonsäure oder substituierte Diphenylstyryle, wie Alkalimetallsalze von 4,4'-Bis-(2-sulfostyrlyl)-diphenyl.

Die erfindungsgemäßen Waschmittel und Reinigungsmittel können schließlich auch noch Duftstoffe und Farbstoffe enthalten.

Erfindungsgemäße Waschmittel und Reinigungsmittel in flüssiger Form oder Gelform können zusätzlich noch bis zu 30 Gew.-% organische Lösungsmittel, wie zum Beispiel Methanol, Ethanol, n-Propanol, Isopropanol, n-Butanol, Ethylenglykol, 1,2-Propylenglykol, 1,3-Propylenglykol, 1,4-Butylenglykol, Glycerin, Diethylenglykol, Ethylenglykolmethylether, Ethanolamin, Diethanolamin und/oder Triethanolamin enthalten.

Die erfindungsgemäßen Waschmittel und Reinigungsmittel zeigen gegenüber Waschmitteln und Reinigungsmitteln, die nicht erfindungsgemäß umhüllte Natriumpercarbonatpartikel enthalten, eine bessere Lagerstabilität mit geringeren Verlusten an Aktivsauerstoffgehalt bei einer Lagerung unter feuchten Bedingungen.

Eine Ausführungsform der erfindungsgemäßen Reinigungsmittel sind Maschinengeschirrreiniger, vorzugsweise in Form von Tabletten, wobei die Geschirrreiniger neben den erfindungsgemäßen umhüllten Natriumpercarbonatpartikeln noch ein Silberkorrosionsschutzmittel enthalten können. Silberkorrosionsschutzmittel sind Mittel, die das Anlaufen von Nichteisenmetallen, insbesondere von Silber, während der maschinellen Reinigung mit dem Maschinengeschirrreiniger verhindern oder vermindern. Als Silberkorrosionsschutzmittel eignen sich Verbindungen aus der Reihe der Triazole, Benzotriazole, Bisbenzotriazole, Aminotriazole und Alkylaminotriazole. Die Verbindungen der genannten Stoffklassen können dabei auch Substituenten, wie zum Beispiel lineare oder verzweigte Alkylgruppen mit 1 bis 20 C-Atomen, sowie Vinyl-, Hydroxy-, Thiol- oder Halogenreste aufweisen. Bei Bisbenzotriazolen sind Verbindungen bevorzugt, in denen die beiden Benzotriazolgruppen jeweils in 6-Stellung über eine Gruppe X verbunden sind, worin X eine Bindung, eine geradkettige, gegebenenfalls mit einer oder mehreren C₁-bis C₄-Alkylgruppen substituierte Alkylengruppe mit bevorzugt 1 bis 6 Kohlenstoffatomen, ein Cycloalkylrest mit mindestens 5 Kohlenstoffatomen, eine Carbonylgruppe, eine Sulfonylgruppe, ein Sauerstoff- oder ein Schwefelatom sein kann. Ein besonders bevorzugtes Silberkorrosionsschutzmittel ist Tolyltriazol.

### Beispiele

### Herstellung von umhüllten Natriumpercarbonatpartikeln

Zur Herstellung der umhüllten Natriumpercarbonatpartikel wurden Natriumpercarbonatpartikel eingesetzt, die nach dem in EP-B 0 716 640 beschriebenen Verfahren durch Wirbelschicht-Aufbaugranulation aus wässriger Wasserstoffperoxidlösung und wässriger Sodalösung hergestellt wurden und einen mittleren Teilchendurchmesser x₅₀ von 0,78 mm und einen Feinkornanteil von kleiner 0,2 mm von weniger als 2 Gew.-% aufwiesen. Die Hüllschicht wurde auf diese Partikel nach dem in EP-B 0 863 842 in Abschnitt [0021] beschriebenen Verfahren aufgebracht durch Aufsprühen einer 20 Gew.-% wässrigen Lösung der Hüllstoffe in einer Wirbelschicht bei einer Wirbelschichttemperatur von 55 bis 60 °C und gleichzeitiges Verdampfen von Wasser und anschließendes Trocknen für 30 min bei einer Temperatur von maximal 90 °C. Die in Tabelle 1 in Gewichtsprozent angegebenen Hüllstoffmengen beziehen sich auf die aufgesprühte Gesamtmenge an Hüllstoffen, gerechnet ohne Kristallwasser, relativ zur Gesamtmenge an eingesetzten Natriumpercarbonatpartikeln und Hüllstoffen.

### Lagerstabilität in Waschpulver

Zur Bestimmung der Lagerstabilität in Waschpulver wurden 405 g zeolithhaltiges Vollwaschmittelpulver IEC-A* BASE (wfk-Testgewebe GmbH, Krefeld) mit 15 g TAED und 80 g Natriumpercarbonat in einem Taumelmischer mindestens 10 min gemischt. Die Mischung wurde in ein wasserabweisend imprägniertes E2-Waschmittelpaket (Abmessung 19 x 14 x 4,5 cm) gefüllt, das mit Heißkleber verschlossen wurde. Das Waschmittelpaket wurde dann im Klimaschrank bei 35 °C und 80 % relativer Luftfeuchte gelagert. Nach Abkühlen des Waschmittelpakets auf Raumtemperatur außerhalb des Klimaschranks wurde der Inhalt des Waschmittelpakets über einen Probenteiler in Proben von je 12 g aufgeteilt. Der Aktivsauerstoffgehalt vor und nach Lagerung wurde in üblicher Weise permanganometrisch bestimmt. Aus dem Aktivsauerstoffgehalt vor der Lagerung und dem Aktivsauerstoffgehalt nach 8 Wochen Lagerung wurde als Maß für die Lagerstabilität in Waschpulver der Erhalt des Aktivsauerstoffgehalts (Oa-Erhalt) in Prozent ermittelt.

**Tabelle 1**

| Lagerstabilität von umhüllten Natriumpercarbonatpartikeln in Waschpulver | | | |
|---|---|---|---|
| Zusammensetzung der Hüllschicht in Gewichtsteilen | Lagerstabilität in Abhängigkeit von der Hüllstoffmenge [Oa-Erhalt in Prozent] | | |
| | 4 Gew.-% Hüllstoffe | 3 Gew.-% Hüllstoffe | 2 Gew.-% Hüllstoffe |
| Na₂SO₄ 100* | 51 | 48 | 43 |
| Na₂SO₄/NaBO₂ 99,5:0,5 | 59 | 54 | 37 |
| Na₂SO₄/NaBO₂ 99:1 | 62 | 51 | 45 |
| Na₂SO₄/NaBO₂ 97,5:2,5 | 71 | 59 | 46 |
| Na₂SO₄/NaBO₂ 95:5 | 81 | 59 | 53 |
| Na₂SO₄/NaBO₂ 90:10 | 79 | | |
| Na₂SO₄/NaBO₂ 80:20 | 76 | | |
| Na₂SO₄/NaBO₂ 50:50* | 71 | | |

| | | | |
|---|---|---|---|
| * Nicht erfindungsgemäß | | | |

Die Versuche wurden für eine Hüllstoffzusammensetzung von 95 Gewichtsteilen Natriumsulfat und 5 Gewichtsteilen Natriummetaborat bzw. reines Natriumsulfat wiederholt, wobei 4 Gew.-% Hüllstoffe mit einer konstanten Sprührate von 11 g/min aufgesprüht wurden und die Konzentration der Hüllstoffe in der aufgesprühten Lösung von 15 bis 30 Gew.-% variiert wurde.

**Tabelle 2**

| Lagerstabilität von umhüllten Natriumpercarbonatpartikeln in Waschpulver | | | | |
|---|---|---|---|---|
| Zusammensetzung der Hüllschicht in Gewichtsteilen | Lagerstabilität in Abhängigkeit von der Konzentration der aufgesprühten Lösung [Oa-Erhalt in Prozent] | | | |
| | 15 Gew.-% | 20 Gew.-% | 25 Gew.-% | 30 Gew.-% |
| Na₂SO₄ 100* | 45 | 53 | 43 | 44 |
| Na₂SO₄/NaBO₂ 95:5 | 83 | 79 | 74 | 63 |

| | | | | |
|---|---|---|---|---|
| * Nicht erfindungsgemäß | | | | |

## Patentansprüche

1. Natriumpercarbonatpartikel mit einer Hüllschicht,
**dadurch gekennzeichnet,**
**dass** die Hüllschicht 70 bis 99,8 Gew.-% wasserfreies Natriumsulfat und 0,2 bis 20 Gew.-% eines Natriumborats enthält und der Gewichtsanteil der Hüllschicht 1 bis 10 % bezogen auf die Masse des Natriumpercarbonatpartikels beträgt.

2. Natriumpercarbonatpartikel nach Anspruch 1,
**dadurch gekennzeichnet,**
**dass** die Hüllschicht weniger als 10 Gew.-% eines Natriumborats enthält.

3. Natriumpercarbonatpartikel nach Anspruch 1 oder 2,
**dadurch gekennzeichnet,**
**dass** der Gehalt an Bor im Bereich von 20 bis 700 ppm bezogen auf die Masse des Natriumpercarbonatpartikels beträgt.

4. Natriumpercarbonatpartikel nach einem der vorangehenden Ansprüche,
**dadurch gekennzeichnet,**
**dass** die Hüllschicht bis zu 25 Gew.-% Natriumcarbonat, Natriumhydrogencarbonat oder Mischungen davon enthält.

5. Natriumpercarbonatpartikel nach einem der vorangehenden Ansprüche,
erhältlich durch Aufsprühen einer wässrigen Lösung, die Natriumsulfat und ein Natriumborat gelöst enthält, und Verdampfen von Wasser in einer Wirbelschicht.

6. Natriumpercarbonatpartikel nach Anspruch 5,
**dadurch gekennzeichnet,**
**dass** eine wässrige Lösung aufgesprüht wird, die nicht mehr als 25 Gew.-% gelöste Salze enthält.

7. Natriumpercarbonatpartikel nach Anspruch 5 oder 6,
**dadurch gekennzeichnet,**
**dass** die wässrige Lösung auf ein Natriumpercarbonatpartikel aufgesprüht wird, das durch Wirbelschichtgranulation aus wässrigen Lösungen von Wasserstoffperoxid und Natriumcarbonat erhältlich ist.

8. Waschmittel,
enthaltend Natriumpercarbonatpartikel nach einem der Ansprüche 1 bis 7.

9. Reinigungsmittel,
enthaltend Natriumpercarbonatpartikel nach einem der Ansprüche 1 bis 7.

## Claims

1. Sodium percarbonate particles with a coating layer,
**characterized in that**
the coating layer comprises 70 to 99.8% by weight of anhydrous sodium sulphate and 0.2 to 20% by weight of a sodium borate, and the weight proportion of the coating layer based on the mass of the sodium percarbonate particle is from 1 to 10%.

2. Sodium percarbonate particles according to Claim 1
**characterized in that**
the coating layer comprises less than 10% by weight of a sodium borate.

3. Sodium percarbonate particles according to Claim 1 or 2,
**characterized in that**
the content of boron is in the range of 20 to 700 ppm based on the mass of the sodium percarbonate particle.

4. Sodium percarbonate particles according to any one of the preceding claims,
**characterized in that**
the coating layer comprises up to 25% by weight of sodium carbonate, sodium hydrogencarbonate or mixtures thereof.

5. Sodium percarbonate particles according to any one of the preceding claims,
obtainable by spraying on an aqueous solution, which comprises sodium sulphate and a sodium borate in dissolved form, and evaporating water in a fluidized bed.

6. Sodium percarbonate particles according to Claim 5,
**characterized in that**
an aqueous solution which contains not more than 25% by weight of dissolved salts is sprayed on.

7. Sodium percarbonate particles according to Claim 5 or 6,
**characterized in that**
the aqueous solution is sprayed onto a sodium percarbonate particle which is obtainable from aqueous solutions of hydrogen peroxide and sodium carbonate by fluidized bed granulation.

8. Detergent,
comprising sodium percarbonate particles according to any one of Claims 1 to 7.

9. Cleaning composition
comprising sodium percarbonate particles according to any one of Claims 1 to 7.

## Revendications

1. Particules de percarbonate de sodium comportant une couche d'enrobage, **caractérisées en ce que** la couche d'enrobage contient de 70 à 99,8 % en poids de sulfate de sodium anhydre et de 0,2 à 20 % en poids d'un borate de sodium et la proportion en poids de la couche d'enrobage va de 1 à 10 % en poids, par rapport à la masse de la particule de percarbonate de sodium.

2. Particules de percarbonate de sodium selon la revendication 1, **caractérisées en ce que** la couche d'enrobage contient moins de 10 % en poids d'un borate de sodium.

3. Particules de percarbonate de sodium selon la revendication 1 ou 2, **caractérisées en ce que** la teneur en bore est dans la plage allant de 20 à 700 ppm, par rapport à la masse de la particule de percarbonate de sodium.

4. Particules de percarbonate de sodium selon l'une quelconque des revendications précédentes, **caractérisées en ce que** la couche d'enrobage contient jusqu'à 25 % en poids de carbonate de sodium, d'hydrogénocarbonate de sodium ou de mélanges de ceux-ci.

5. Particules de percarbonate de sodium selon l'une quelconque des revendications précédentes, pouvant être obtenues par pulvérisation d'une solution aqueuse, qui contient dissous du sulfate de sodium et un borate de sodium, et évaporation de l'eau dans une couche fluidisée.

6. Particules de percarbonate de sodium selon la revendication 5, **caractérisées en ce qu'**on pulvérise une solution aqueuse qui ne contient pas plus de 25 % en poids de sels dissous.

7. Particules de percarbonate de sodium selon la revendication 5 ou 6, **caractérisées en ce qu'**on pulvérise la solution aqueuse sur une particule de percarbonate de sodium qui peut être obtenue par granulation en couche fluidisée, à partir de solutions aqueuses de peroxyde d'hydrogène et de carbonate de sodium.

8. Lessive contenant des particules de percarbonate de sodium selon l'une quelconque des revendications 1 à 7.

9. Produit de nettoyage contenant des particules de percarbonate de sodium selon l'une quelconque des revendications 1 à 7.
